# EUROPEAN PATENT SPECIFICATION

(11) **EP 1 828 733 B1**
(45) Date of publication and mention of the grant of the patent: **20.07.2011**
(21) Application number: 05813694.6
(22) Date of filing: 27.10.2005
(51) Int. Cl.: G01L 1/22

(54) **MECHANICAL STRESS CHROMIUM SILICIDE THIN FILM SENSOR**
CHROMSILIZID-DÜNNFILMSENSOR FÜR MECHANISCHE BELASTUNGEN
CAPTEUR DE CONTRAINTE MECANIQUE A FILM MINCE DE SILICIURE DE CHROME

(30) Priority: 29.10.2004 IT RM20040532
(43) Date of publication of application: 05.09.2007
(73) Proprietor: UNIVERSITA' DEGLI STUDI DI ROMA "LA SAPIENZA", 00185 Roma (IT)
(72) Inventor: DE CESARE,Giampiero Università degli Studi di Roma, 00185 Roma (IT); PALMA,Fabrizio Università degli Studi di Roma, 00185 Roma (IT)
(74) Representative: Iannone, Carlo Luigi
(86) International application number: PCT/IT2005/000623
(87) International publication number: WO 2006/046269

(56) References cited:
- PATENT ABSTRACTS OF JAPAN vol. 013, no. 412 (P-932), 12 September 1989 (1989-09-12) & JP 01 150832 A (FUJI ELECTRIC CO LTD), 13 June 1989 (1989-06-13)

## Description

The present invention concerns a mechanical stress sensor, employing piezoresistive chromium silicide thin films, that is simple, reliable, efficient, precise, and inexpensive, that has optimal response linearity and high resolution and sensitivity, that entails a reduced power consumption, and that is easily integratable with the processing electronic circuit.

The present invention further concerns the related manufacturing process that is simple, performable at low temperature, reliable, and inexpensive. The present invention also concerns the measuring device employing the sensor.

It is known that the mechanical stress is an important physical parameter in many application fields, ranging from the classical ones of monitoring apparatuses subject to stress, for instance in mechanical construction industry, to the advanced robotics ones of more recent interest.

In practice, a mechanical stress sensor is a transducer providing a current or voltage electric signal depending on the mechanical deformation of the material.

Several devices have been developed for application in stress sensors, many of which are based on the use of thin and/or thick film piezoresistive materials.

The fundamental structure of these devices is the Wheatstone resistive bridge one, where a bridge branch is constituted by the piezoresistive material the resistance of which varies depending on the mechanical stress to which the same material is subjected. The resistive bridge is generally supplied with constant current between two opposed nodes of the structure, the voltage between the other two nodes giving the sensor output signal.

In rest state, the four bridge resistances are equal to each other, i.e. the bridge is balanced, and the sensor output is zero. The presence of a mechanical stress modifies the resistance of the piezoresistive branch thus inducing an electric unbalance of the bridge and the occurrence of a voltage signal proportional to the deformation.

Crystalline silicon is one of the most used materials for its piezoelectric properties and for the possibility to integrate the device with the control electronics.

European Patents No. EP 358 040 B1 discloses such a piezoelectric component, provided with a conductive surface electrode made by means of substances of the III to VIII group of the periodic table.

However, a drawback of these components is the need of using glues for sticking the sensor to the material subjected to mechanical stress. The mechanical absorption of the adhesive introduces nonlinearities to the whole response of the system, and a reduction of sensor resolution and sensitivity.

Alternative solutions employ piezoelectric material thin films, made on substrates of different type, as active material for mechanical stress sensors. Such thin films may be made, for instance, of amorphous silicon or lead titanate, possibly deposited at low temperature, while the substrates are generally of, possibly machined, silicon.

Japanese Patent Applications No.s JP 63069280 and JP 63003505 disclose piezoelectric devices of this type, made through formation of a titanate film as piezoelectric material onto a silicon substrate. Processes described in these two documents are particularly complex and comprise steps performed at high temperature.

The drawbacks of present piezoelectric thin film devices are due to the high surface resistivity of the material, whereby these devices need relatively high electric voltages for supplying the Wheatstone bridge. In case of piezoelectric thin films in amorphous silicon, an increase of conductivity is obtainable by means of recrystallisation techniques, through micro-melting of the layer induced by high energy laser beams; it is alternatively possible to deposit micro-crystalline layers from plasma of high hydrogen content mixtures, with temperatures higher than those of the amorphous layer, and with low growth rates. However, the process of manufacturing such devices occurs at high temperatures and is particularly complex.

It is therefore an object of the present invention to provide a mechanical stress sensor having an optimal response linearity, and high resolution and sensitivity.

It is still an object of the present invention to provide such a sensor that entails a reduced power consumption with low supply voltages, and that is easily integratable with the processing electronic circuit.

It is further an object of the present invention to provide such a sensor that is manufacturable through a process which is simple, performable at low temperature, reliable, and inexpensive.

It is specific subject matter of the present invention a mechanical stress sensor, directly manufactured and/or applied onto a substrate subjected to mechanical stress, comprising a layer of n-type hydrogenated amorphous silicon and an active layer, with which two or more metallic electrodes are in contact, characterised in that said active layer comprises a piezoresistive chromium silicide thin film.

Preferably according to the invention, the piezoresistive chromium silicide thin film is obtained from the spontaneous reaction between a metallic chromium film, deposited onto n-type hydrogenated amorphous silicon, and n-type hydrogenated amorphous silicon.

Still preferably according to the invention, the layer of n-type hydrogenated amorphous silicon has a thickness sufficient to activate the reaction with said metallic chromium film.

Always according to the invention, the substrate may be flat and/or curved and/or flexible.

Still according to the invention, the substrate may be insulating.

Furthermore according to the invention, the substrate may comprise plastic and/or ceramic material.

Always according to the invention, the substrate may be conductive and the sensor may further comprise an insulating layer, interposed between the layer of n-type hydrogenated amorphous silicon and the conductive substrate, which is apt to electrically insulate the layer of n-type hydrogenated amorphous silicon and the conductive substrate.

Still according to the invention, the insulating layer may be made of a material comprising silicon oxide and/or silicon nitride and/or intrinsic amorphous silicon.

Furthermore according to the invention, said two or more metallic electrodes may be directly made onto the piezoresistive chromium silicide thin film.

Always according to the invention, the sensor may comprise at least one first pair of metallic electrodes of biasing and at least one second pair of metallic electrodes of detection, in contact with the piezoresistive chromium silicide thin film.

Still according to the invention, the sensor may comprises a first pair of metallic electrodes of biasing and a second pair of metallic electrodes of detection, arranged so that the axis joining the first pair of electrodes is orthogonal to, or even positioned according to a different angle with respect to, the axis joining the second pair of electrodes.

It is still specific subject matter of the present invention a process of manufacturing such a mechanical stress sensor, characterised in that it comprises the following steps:
A. depositing a layer of n-type hydrogenated amorphous silicon onto a base layer comprising the substrate;
B. vacuum depositing a layer of chromium onto the layer of n-type hydrogenated amorphous silicon deposited in step A;
C. etching the chromium by means of an acid solution; and
D. making said two or more metallic electrodes onto the surface resulting from the etching of step C.

Preferably according to the invention, steps A, B, C, and D are performed at temperatures ranging from 20°C to 300°C, for instance not higher than 200°C, more preferably not higher than 150°C, still more preferably not higher than 100°C.

Always preferably according to the invention, the chromium layer deposited in step B has a thickness sufficient to activate the reaction with the film of n-type hydrogenated amorphous silicon.

Still according to the invention, in step A the layer (3) of n-type hydrogenated amorphous silicon may be deposited through the CVD (Chemical Vapour Deposition) technique and/or through the PVD (Physical Vapour Deposition) technique.

Furthermore according to the invention, the substrate may be either insulating or, alternatively, conductive, and in this case said base layer further comprises an insulating layer onto which the layer of n-type hydrogenated amorphous silicon is deposited in step A.

Always according to the invention, the insulating layer may comprise silicon oxide and/or silicon nitride an d/or intrinsic amorphous silicon.

Still according to the invention, the insulating layer may be deposited onto the conductive substrate through the CVD (Chemical Vapour Deposition) technique and/or through the PVD (Physical Vapour Deposition) technique and/or through electrochemical technique.

It is further specific subject matter of the present invention a device of measuring the mechanical stress applied on a substrate comprising such a sensor.

Always according to the invention, the device of measuring the mechanical stress may further comprise generator means for providing the piezoresistive chromium silicide thin film with a constant current through said at least one first pair of metallic electrodes, and electronic means for detecting a voltage across the metallic electrodes of said at least one second pair, so as to provide an output voltage V0 proportional to the mechanical stress applied to the substrate.

The present invention will now be described, by way of illustration and not by way of limitation, according to its preferred embodiments, by particularly referring to the Figures of the enclosed drawings, in which:
Figure 1 schematically shows a measuring device employing a preferred embodiment of the sensor according to the invention;
Figure 2 shows a cross section of the sensor of Figure 1;
Figure 3 shows a cross section of a further embodiment of the sensor according to the invention; and
Figure 4 shows a graph concerning the response of the sensor of Figure 2 to tensile and compressive forces applied onto the same.

In the Figures, alike elements are indicated by same reference numbers.

The inventors have developed a new mechanical stress sensor employing chromium silicide films with piezoresistive properties as active material. Such films are made by means of room temperature techniques In particular, chromium silicide is made in thin film with thicknesses of some tens of nanometers, and derives from the interaction, at room, of a hydrogenated amorphous silicon layer with chromium thin films. Film conductivity of piezoresistive chromium silicide is higher by about three orders of magnitude than that of doped amorphous silicon usually employed in prior art stress sensors, and this allows manufacturing low power devices made by means of processes at temperatures lower tha n 100°C.

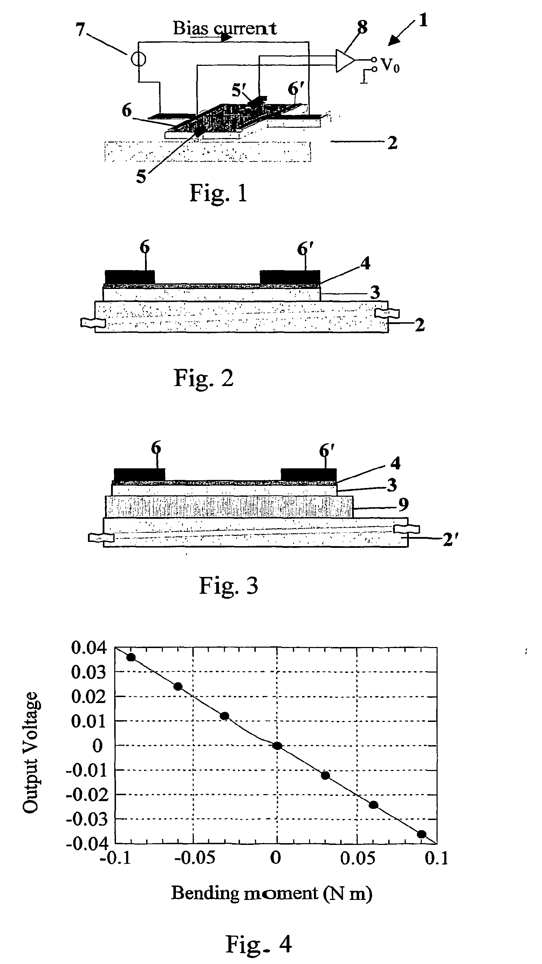

With reference to Figures 1 and 2, it may be observed a measuring device 1 employing a preferred embodiment of the sensor according to the invention, applied to an insulating substrate 2 subjected to stress the value of which is measured by the device 1.

In particular, the sensor of Figures 1 and 2 comprises:
- a layer 3 of n-type hydrogenated amorphous silicon (a-Si:H), having a thickness preferably not lower than 30 nanometers, still more preferably not lower than 50 nanometers, and
- a thin film 4 of piezoresistive chromium silicide, having a thickness preferably not higher than 20 nanometers, still more preferably not higher than 10 nanometers.

The sensor also comprises, in contact with the thin film 4, a first pair of metallic electrodes 5 and 5' and a second pair of metallic electrodes 6 and 6', preferably arranged so that the axis (parallel to the surface of the thin film 4) joining the first pair of electrodes 5 and 5' is orthogon al to the axis (still parallel to the surface of the thin film 4) joining the second pair of electrodes 6 and 6' Preferably, the metallic electrodes 5, 5', 6, and 6' are directly made onto the thin film 4.

As shown in Figure 1, the physical structure of device 1 is equivalent, from an electrical point of view, to the series of four resistors connected to each other as in a Wheatstone bridge. In particular, the two metallic electrodes 6 and 6', opposite to each other, are used for supplying the structure with a constant current (supplied by a generator 7), while the other two metallic electrodes 5 and 5', orthogonal to the electrodes 6 and 6', provide (for instance through a suitable differential amplifier stage 8) for an output voltage V0 proportional to the bridge unbalance due to a variation of the resistivity of the silicide thin film 4, induced by the mechanical stress. In other words, the output voltage V0 depends on the surface resistivity of the chromium silicide thin film 4, which in turn depends on the mechanical stress applied to the substrate 2.

The preferred embodiment of the process of manufacturing of the sensor of Figures 1 and 2, made onto the insulating substrate 2, comprises the following steps:
A. depositing onto the insulating substrate 2, that in practical applications will be the material subjected to mechanical stress, a layer 3 of n-type hydrogenated amorphous silicon, preferably using one of the CVD (Chemical Vapour Deposition) or PVD (Physical Vapour Deposition) or electrochemical techniques which a re normally used for thin film deposition;
B. forming a chromium silicide thin film through vacuum deposition of a chromium layer; in particular, the layer 3 of n-type hydrogenated amorphous silicon and chromium layer have a thickness sufficient for activating the spontaneous reaction between chromium and amorphous silicon, so that at the chromium/silicon interface the room temperature reaction forming the silicide thin film 4 occurs;
C. etching the residual chromium with an acid solution;
D. making the metallic electrodes 5, 5', 6 and 6' of the device 1; and
E. patterning the device active area, by selective etching the amorphous silicon-chromium silicide structure.

The thickness of the amorphous layer 3 is not a fundamental parameter for the operation of the device 1, since it only has the function of activator for the growth of the chromium silicide thin film 4; thicknesses hig her than some tens of nanometers are sufficient to allow the reaction between chromium and silicon. Moreover, the temperature of the material (both chromium and electrode metal) deposition may be very low, down to room temperature, since the material electronic characteristics, strongly dependent upon deposition temperature, have not an important role in device operation.

The innovative part of the sensor is the use of the chromium silicide thin film 4 as active material. Its piezoresistive and high conductive characteristics determine the value of the resistances across the metallic electrodes of the resistive bridge.

With reference to Figure 3, it may observed another measuring device 1 that employs a further embodiment of the sensor according to the invention, applied to a conductive, in particular metallic, substrate 2' subjected to stress. The sensor of Figure 3 thus comprises an insulating layer 9 interposed between the hydrogenated amorphous silicon layer 3 and the metallic substrate 2'. In fact, it is necessary to electrically insulate the active layer of the device 1, constituted by the chromium silicide thin film 4, from the substrate 2', for preventing the bridge supplying current from flowing within the substrate 2' instead within the piezoresistive film 4. To this end, the thickness of the insulating layer 9 is preferably not lower than 50 nanometers.

As insulating material for the layer 9 thin films of any type may be used provided that they are sufficiently insulating, the preferred embodiment comprising silicon oxide and/or silicon nitride and/or intrinsic amorphous silicon layers, commonly grown by means of the same technique of the amorphous silicon.

Figure 4 shows the response of the device of Figure 1, whereby the sensor according to the invention is applied to a glass substrate 2. In particular, the graph shows the output voltage V0 as a function of the force applied to the glass substrate 2. It is evident that the chromium silicide thin film 4 is capable to measure tensile and compressive forces with high linearity.

With respect to prior art mechanical stress sensors, the invention solves the problems of sensitivity loss due to the presence of adhesive material, of power consumption, of integration over large areas, of integration with the processing electronic circuit, with a considerable reduction of manufacturing costs.

In particular, the sensor according to the invention is advantageously applicable onto plastic and/or ceramic substrates. The substrate may have any shape, for instance flat and/or curved.

The advantages offered by the present invention are evident.

First of all, the use of chromium silicide as active material, directly deposited onto the zone of which the applied stress is to be detected, by means of the thin film technology, allows the manufacture of high linearity and low cost devices.

Moreover, temperatures during the various steps of the process for manufacturing the sensor are such to allow it to be made on several substrates: vitreous, plastic, metallic ones.

Still, the sensor according to the invention may be used in many applications in the field of sensors for mechanical stress, where reduced size and high sensitivity of the device are fundamental requirements, as for instance in making:
- automatic handling systems using robotised arms, which need high performance tactile sensors which, inserted in feedback measuring systems, allow the grip force to be controlled, for non-destructively handling objects;
- miniaturised sensors for pressu re measure, with the active material deposited onto ceramic or plastic flexible membranes; and
- medical diagnostic and microsurgery systems.

The present invention has been described, by way of illustration and not by way of limitation, according its preferred embodiment, but it should be understood that those skilled in the art can make variations and/or changes, without so departing from the related scope of protection, as defined by the enclosed claims.

## Claims

1. Mechanical stress sensor, directly manufactured and/or applied onto a substrate (2, 2') su bjected to mechanical stress, comprising a layer (3) of n-type hydrogenated amorphous silicon and an active layer, with which two or more metallic electrodes (5, 5', 6, 6') are in contact, **characterised in that** said active layer comprises a piezoresistive chromium silicide thin film (4).

2. Sensor according to claim 1, **characterised in that** the piezoresistive chromium silicide thin film (4) is obtained from the spontaneous reaction between a metallic chromium film, deposited onto n-type hydrogenated amorphous silicon, and n-type hydrogenated amorphous silicon.

3. Sensor according to claim 2, **characterised in that** the layer (3) of n-type hydrogenated amorphous silicon has a thickness sufficient to activate the reaction with said metallic chromium film.

4. Sensor according to any one of the preceding claims, **characterised in that** the substrate (2) is flat and/or curved and/or flexible.

5. Sensor according to any one of the preceding claims, **characterised in that** the substrate (2) is insulating.

6. Sensor according to claim 5, **characterised in that** the substrate (2) comprises plastic and/or ceramic material.

7. Sensor according to any one of claims 1 to 5, **characterised in** th at the substrate (2') is conductive and **in that** it further comprises an insulating layer (9), interposed between the layer (3) of n-type hydrogenated amorphous silicon and the conductive substrate (2'), which is apt to electrically insulate the layer (3) of n-type hydrogenated amorphous silicon and the conductive substrate (2').

8. Sensor accord ing to claim 7, **characterised in that** the insulating layer (9) is made of a material comprising silicon oxide and/or silicon nitride and/or intrinsic amorphous silicon.

9. Sensor according to any one of the preceding claims, **characterised in that** said two or more metallic electrodes (5, 5', 6, 6') are directly made onto the piezoresistive chromium silicide thin film (4).

10. Sensor according to any one of the preceding claims, **characterised in that** it comprises at least one first pair of metallic electrodes (6, 6') of biasing and at least one second pair of metallic electrodes (5, 5') of detection, in contact with the piezoresistive chromium silicide thin film (4).

11. Sensor according to claim 10, **characterised in that** it comprises a first pair of metallic electrodes (6, 6') of biasing and a second pair of metallic electrodes (5, 5') of detection, arranged so that the axis joining the first pair of electrodes (6, 6') is orthogonal to the axis joining the second pair of electrodes (5, 5').

12. Process of manufacturing a mechanical stress sensor according to any one of the preceding claims, **characterised in that** it comprises the following steps:
A. depositing a layer (3) of n-type hydrogenated amorphous silicon onto a base layer comprising the substrate (2, 2');
B. vacuum depositing a layer of chromium onto the layer (3) of n-type hydrogenated amorphous silicon deposited in step A;
C. etch ing the chromium by means of an acid solution; and
D. making said two or more metallic electrodes (5, 5', 6, 6') onto the surface resulting from the etching of step C.

13. Process according to claim 12, **characterised in that** steps A, B, C, and D are performed at temperatures ranging from 20°C to 300°C.

14. Process according to claim 12 or 13, **characterised in that** the chromium layer deposited in step B has a thickness sufficient to activate the reaction with the film of n-type hydrogenated amorphous silicon.

15. Process according to any one of claims 12 to 14, **characterised in that** in step A the layer (3) of n-type hydrogenated amorphous silicon is deposited through the CVD (Chemical Vapour Deposition) technique and/or through the PVD (Physical Vapour Deposition) technique.

16. Process according to any one of claims 12 to 15, **characterised in that** the substrate (2) is insulating.

17. Process according to any one of claims 12 to 15, **characterised in that** the substrate (2') is conductive and **in that** said base layer further comprises an insulating layer (9) onto which the layer (3) of n-type hydrogenated amorphous silicon is deposited in step A.

18. Process according to claim 17, **characterised in that** the insulating layer (9) comprises silicon oxide and/or silicon nitride and/or intrinsic amorphous silicon.

19. Process according to claim 17 or 18, **characterised in that** the insulating layer (9) is deposited onto the conductive substrate (2') through the CVD (Chemical Vapour Deposition) technique and/or through the PVD (Physical Vapour Deposition) technique and/or through electrochemical technique.

20. Device of measuring the mechanical stress applied on a substrate (2, 2'), **characterised in that** it comprises a mechanical stress sensor according to any one of claims 1 to 11.

21. Device according to claim 20, **characterised in that** the mechanical stress sensor is a sensor according to claim 10 or 11, and **in that** it further comprises generator means (7) for providing the piezoresistive chromium silicide thin film (4) with a constant current through said at least one first pair of metallic electrodes (6, 6'), and electronic means (8) for detecting a voltage across the metallic electrodes (5, 5') of said at least one second pair, so as to provide an output voltage VO proportional to the mechanical stress applied to the substrate (2, 2').

## Patentansprüche

1. Sensor für mechanische Belastungen, direkt hergestellt und/oder aufgebracht auf einem Substrat (2, 2'), das einer mechanischen Belastung unterworfen wird, umfassend eine Schicht (3) eines hydrierten amorphen Siliciums vom n-Typ und eine aktive Schicht, mit der zwei oder mehr metallische Elektroden (5, 5', 6, 6') in Kontakt sind, **dadurch gekennzeichnet, dass** die aktive Schicht einen piezoresistiven Chromsilicid-Dünnfilm (4) umfasst.

2. Sensor nach Anspruch 1, **dadurch gekennzeichnet, dass** der piezoresistive Chromsilicid-Dünnfilm (4) durch die spontane Reaktion zwischen einem metallischen Chromfilm, abgeschieden auf hydriertem amorphen Silicium vom n-Typ, und hydriertem amorphen Silicium vom n-Typ erhalten wird.

3. Sensor nach Anspruch 2, **dadurch gekennzeichnet, dass** die Schicht (3) des hydrierten amorphen Siliciums vom n-Typ eine ausreichende Dicke aufweist, um die Reaktion mit dem metallischen Chromfilm zu aktivieren.

4. Sensor nach irgendeinem der vorhergehenden Ansprüche, **dadurch gekennzeichnet, dass** das Substrat (2) flach und/oder gekrümmt und/oder flexibel ist.

5. Sensor nach irgendeinem der vorhergehenden Ansprüche, **dadurch gekennzeichnet, dass** das Substrat (2) isolierend ist.

6. Sensor nach Anspruch 5, **dadurch gekennzeichnet, dass** das Substrat (2) Kunststoff- und/oder Keramikmaterial umfasst.

7. Sensor nach irgendeinem der Ansprüche 1 bis 5, **dadurch gekennzeichnet, dass** das Substrat (2') leitend ist und dass er ferner eine Isolationsschicht (9), angeordnet zwischen der Schicht (3) des hydrierten amorphen Siliciums vom n-Typ und dem leitenden Substrat (2'), umfasst, welche geeignet ist, die Schicht (3) des hydrierten amorphen Siliciums vom n-Typ und das leitende Substrat (2') elektrisch zu isolieren.

8. Sensor nach Anspruch 7, **dadurch gekennzeichnet, dass** die Isolationsschicht (9) aus einem Material, das Siliciumoxid und/oder Siliciumnitrid und/oder intrinsisches amorphes Silicium umfasst, gebildet ist.

9. Sensor nach irgendeinem der vorhergehenden Ansprüche, **dadurch gekennzeichnet, dass** die zwei oder mehr metallischen Elektroden (5, 5', 6, 6') direkt auf dem piezoresistiven Chromsilicid-Dünnfilm (4) gebildet sind.

10. Sensor nach irgendeinem der vorhergehenden Ansprüche, **dadurch gekennzeichnet, dass** er mindestens ein erstes Paar von metallischen Elektroden (6, 6') zur Vorspannung und mindestens ein zweites Paar von metallischen Elektroden (5, 5') zum Nachweis in Kontakt mit dem piezoresistiven Chromsilicid-Dünnfilm (4) umfasst.

11. Sensor nach Anspruch 10, **dadurch gekennzeichnet, dass** er ein erstes Paar von metallischen Elektroden (6, 6') zur Vorspannung und ein zweites Paar von metallischen Elektroden (5, 5') zum Nachweis umfasst, die so angeordnet sind, dass die Achse, welche das erste Paar von Elektroden (6, 6') verbindet, orthogonal zu der Achse liegt, welche das zweite Paar von Elektroden (5, 5') verbindet.

12. Verfahren zur Herstellung eines Sensors für mechanische Belastungen nach irgendeinem der vorhergehenden Ansprüche, **dadurch gekennzeichnet, dass** es die folgenden Schritte umfasst :
A. Abscheiden einer Schicht (3) von hydriertem amorphen Silicium vom n-Typ auf eine Grundschicht, welche das Substrat (2, 2') umfasst;
B. Vakuumabscheiden einer Schicht von Chrom auf die in Schritt A abgeschiedene Schicht (3) von hydriertem amorphen Silicium vom n-Typ;
C. Ätzen des Chroms mittels einer Säurelösung; und
D. Bilden der zwei oder mehr metallischen Elektroden (5, 5', 6, 6') auf der Oberfläche, die das Ergebnis des Ätzens von Schritt C ist.

13. Verfahren nach Anspruch 12, **dadurch gekennzeichnet, dass** die Schritte A, B, C und D bei Temperaturen im Bereich von 20° C bis 300° C durchgeführt werden.

14. Verfahren nach Anspruch 12 oder 13, **dadurch gekennzeichnet, dass** die in Schritt B abgeschiedene Chromschicht eine ausreichende Dicke aufweist, um die Reaktion mit dem Film des hydrierten amorphen Siliciums vom n-Typ zu aktivieren.

15. Verfahren nach irgendeinem der Ansprüche 12 bis 14, **dadurch gekennzeichnet, dass** in Schritt A die Schicht (3) des hydrierten amorphen Siliciums vom n-Typ durch die Technik der chemischen Dampfabscheidung (CVD) und/oder die Technik der physikalischen Dampfabscheidung (PVD) abgeschieden wird.

16. Verfahren nach irgendeinem der Ansprüche 12 bis 15, **dadurch gekennzeichnet, dass** das Substrat (2) isolierend ist.

17. Verfahren nach irgendeinem der Ansprüche 12 bis 15, **dadurch gekennzeichnet, dass** das Substrat (2') leitend ist und dass die Grundschicht ferner eine Isolationsschicht (9) umfasst, auf der die Schicht (3) von hydriertem amorphen Silicium vom n-Typ in Schritt A abgeschieden wird.

18. Verfahren nach Anspruch 17, **dadurch gekennzeichnet, dass** die Isolationsschicht (9) Siliciumoxid und/oder Siliciumnitrid und/oder intrinsisches amorphes Silicum umfasst.

19. Verfahren nach Anspruch 17 oder 18, **dadurch gekennzeichnet, dass** die Isolationsschicht (9) auf dem leitenden Substrat (2') durch die Technik der chemischen Dampfabscheidung (CVD) und/oder die Technik der physikalischen Dampfabscheidung (PVD) und/oder durch eine elektrochemische Technik abgeschieden wird.

20. Vorrichtung zur Messung der mechanischen Belastung, die auf ein Substrat (2, 2') ausgeübt wird, **dadurch gekennzeichnet, dass** sie einen Sensor für mechanische Belastungen nach irgendeinem der Ansprüche 1 bis 11 umfasst.

21. Vorrichtung nach Anspruch 20, **dadurch gekennzeichnet, dass** der Sensor für mechanische Belastungen ein Sensor nach Anspruch 10 oder 11 ist und dass sie ferner Generatormittel (7) zur Versorgung des piezoresistiven Chromsilicid-Dünnfilms (4) mit einem konstanten Strom durch das mindestens eine erste Paar von metallischen Elektroden (6, 6') und elektronische Mittel (8) zum Nachweis einer Spannung über die Metallelektroden (5, 5') des mindestens einen zweiten Paares umfasst, um so eine Ausgangsspannung VO proportional der mechanischen Belastung, die auf das Substrat (2, 2') ausgeübt wird, bereitzustellen.

## Revendications

1. Capteur de contrainte mécanique, directement fabriqué et/ou appliqué sur un substrat (2, 2') soumis à une contrainte mécanique, comprenant une couche (3) de silicium amorphe hydrogéné de type n et une couche active, avec lesquelles sont en contact au moins deux électrodes métalliques (5, 5', 6, 6'), **caractérisé en ce que** ladite couche active comprend un film mince de siliciure de chrome piézorésistif (4).

2. Capteur selon la revendication 1, **caractérisé en ce que** le film mince de siliciure de chrome piézorésistif (4) est obtenu à partir de la réaction spontanée entre un film de chrome métallique, déposé sur le silicium amorphe hydrogéné de type n, et le silicium amorphe hydrogéné de type n.

3. Capteur selon la revendication 2, **caractérisé en ce que** la couche (3) de silicium amorphe hydrogéné de type n a une épaisseur suffisante pour activer la réaction avec ledit film de chrome métallique.

4. Capteur selon l'une quelconque des revendications précédentes, **caractérisé en ce que** le substrat (2) est plat et/ou incurvé et/ou flexible.

5. Capteur selon l'une quelconque des revendications précédentes, **caractérisé en ce que** le substrat (2) est isolant.

6. Capteur selon la revendication 5, **caractérisé en ce que** le substrat (2) comprend un matériau plastique et/ou céramique.

7. Capteur selon l'une quelconque des revendications 1 à 5, **caractérisé en ce que** le substrat (2') est conducteur et **en ce qu'**il comprend, en outre, une couche isolante (9), interposée entre la couche (3) de silicium amorphe hydrogéné de type n et le substrat conducteur (2'), qui est apte à isoler électriquement la couche (3) de silicium amorphe hydrogéné de type n et le substrat conducteur (2').

8. Capteur selon la revendication 7, **caractérisé en ce que** la couche isolante (9) est constituée d'un matériau comprenant de l'oxyde de silicium et/ou du nitrure de silicium et/ou du silicium amorphe intrinsèque.

9. Capteur selon l'une quelconque des revendications précédentes, **caractérisé en ce que** lesdites au moins deux électrodes métalliques (5, 5', 6, 6') sont directement réalisées sur le film mince de siliciure de chrome piézorésistif (4).

10. Capteur selon l'une quelconque des revendications précédentes, **caractérisé en ce qu'**il comprend au moins une première paire d'électrodes métalliques (6, 6') de polarisation et au moins une seconde paire d'électrodes métalliques (5, 5') de détection, en contact avec le film mince de siliciure de chrome piézorésistif (4).

11. Capteur selon la revendication 10, **caractérisé en ce qu'**il comprend une première paire d'électrodes métalliques (6, 6') de polarisation et une seconde paire d'électrodes métalliques (5, 5') de détection, agencées de telle sorte que l'axe joignant la première paire d'électrodes (6, 6') est orthogonal à l'axe joignant la seconde paire d'électrodes (5, 5').

12. Procédé de fabrication d'un capteur de contrainte mécanique selon l'une quelconque des revendications précédentes, **caractérisé en ce qu'**il comprend les étapes suivantes :
A. déposer une couche (3) de silicium amorphe hydrogéné de type n sur une couche de base comprenant le substrat (2, 2');
B. déposer sous vide une couche de chrome sur la couche (3) de silicium amorphe hydrogéné de type n déposé à l'étape A;
C. attaquer le chrome au moyen d'une solution acide; et
D. réaliser les au moins deux électrodes métalliques (5, 5', 6, 6') sur la surface résultant de l'attaque de l'étape C.

13. Procédé selon la revendication 12, **caractérisé en ce que** les étapes A, B, C et D sont exécutées à des températures comprises entre 20°C et 300°C.

14. Procédé selon la revendication 12 ou 13, **caractérisé en ce que** la couche de chrome déposée à l'étape B a une épaisseur suffisante pour activer la réaction avec le film de silicium amorphe hydrogéné de type n.

15. Procédé selon l'une quelconque des revendications 12 à 14, **caractérisé en ce qu'**à l'étape A la couche (3) de silicium amorphe hydrogéné de type n est déposée au moyen de la technique CVD (dépôt chimique en phase vapeur) et/ou de la technique PVD (dépôt physique en phase vapeur).

16. Procédé selon l'une quelconque des revendications 12 à 15, **caractérisé en ce que** le substrat (2) est isolant.

17. Procédé selon l'une quelconque des revendications 12 à 15, **caractérisé en ce que** le substrat (2') est conducteur et **en ce que** ladite couche de base comprend, en outre, une couche isolante (9) sur laquelle est déposée à l'étape A la couche (3) de silicium amorphe hydrogéné de type n.

18. Procédé selon la revendication 17, **caractérisé en ce que** la couche isolante (9) comprend de l'oxyde de silicium et/ou du nitrure de silicium et/ou du silicium amorphe intrinsèque.

19. Procédé selon la revendication 17 ou 18, **caractérisé en ce que** la couche isolante (9) est déposée sur le substrat conducteur (2') au moyen de la technique CVD (dépôt chimique en phase vapeur) et/ou de la technique PVD (dépôt physique en phase vapeur) et/ou de la technique électrochimique.

20. Dispositif de mesure de la contrainte mécanique appliquée sur un substrat (2, 2'), **caractérisé en ce qu'**il comprend un capteur de contrainte mécanique selon l'une quelconque des revendications 1 à 11.

21. Dispositif selon la revendication 20, **caractérisé en ce que** le capteur de contrainte mécanique est un capteur selon la revendication 10 ou 11, et **en ce qu'**il comprend, en outre, un moyen générateur (7) pour fournir au film mince de siliciure de chrome (4) un courant constant via ladite au moins une paire d'électrodes métalliques (6, 6'), et des moyens électroniques (8) pour détecter une tension à travers les électrodes métalliques (5, 5') de ladite au moins une seconde paire, de façon à fournir une tension de sortie VO proportionnelle à la contrainte mécanique appliquée au substrat (2, 2').
